# EUROPEAN PATENT APPLICATION

(11) **EP 1 881 103 A1**
(43) Date of publication of application: **23.01.2008**
(21) Application number: 06122621.3
(22) Date of filing: 19.10.2006
(51) Int. Cl.: D06F 93/00

(54) **System for automatically processing laundry articles**

(30) Priority: 19.07.2006 KR 20060067374
(71) Applicant: Jang, Moon-Suk, 07981 NJ New Jersey Whipplay (US)
(72) Inventor: Jang, Moon-Suk, 07981 NJ New Jersey Whipplay (US)
(74) Representative: Reitstötter - Kinzebach

(57) **Abstract**

The present invention relates to a system for automatically processing laundry comprising a user terminal (10) for storing laundry information and customer information according to the input of a user key and for sending and/or receiving stored information to and/or from the outside; a bar code modem (12) connected to the user terminal (10) for programming the laundry in accordance with the laundry information and for printing a bar code form that is attached to the laundry; a wireless scanner, installed on one side of a storage facility for storing and moving the laundry, which can read the bar code that is attached to the laundry and send the information to the user terminal (10); a wireless modem that is attached to the user terminal (10) and that enables the communication between the wireless scanner and the user terminal (10); and a sorting indicator (22) coupled to the means for storing the laundry in the storage facility for displaying received laundry information and the quantity of unsorted laundry to the customer and for sending the information regarding stored laundry to the user terminal (10) and for displaying the location of the stored laundry to the customer.

## Description

This invention relates to a system for automatically processing laundry, more specifically a system for automatically processing laundry that prevents the error of incorrectly sorting laundry that has been brought to a laundry service, thus reducing the economic loss caused by such mistakes and improving the efficiency of the service on the whole.

Washing is performed to get rid of dirt on textiles such as clothing, bedding, tableware such as tablecloths or napkins, or furniture ware such as upholstery, etc. This is done by means of chemicals such as detergents, by means of machines, by washing or boiling the dirty laundry in water into which a detergent or other soaps have been dissolved, and drying, starching, ironing, and/or dry-cleaning, if necessary: all these activities belong to the work of washing.

The objective of washing is to recover the beauty and cleanliness of clothing by getting rid of dirt and to improve the durability of textiles. In order to achieve these things, many use a professional laundry service.

The laundry service, whether small-, medium- or large-sized, performs the work of sorting and wrapping the laundry: attaching the name of the customer or customer tag on each batch of laundry when it arrives, and, after finishing the work process (washing, mending, ironing, etc), hanging them on hangers together with the invoice detailing the name of the customer or customer tag and the quantity of laundry, sorting/wrapping the laundry, and sending it to the customer.

However, in cases in which the laundry of more than thirty customers must be sorted simultaneously, the process of confirming the name of the customer on the customer tag and hanging the finished laundry on the hangers with the invoices detailing the name or the tag number and the quantity of laundry one by one can be a very tedious task and labour-intensive, thus increasing the risk of mistakes.

If incorrectly sorted laundry is sent because of this difficulty, the customers will demand compensation and the laundry service will lose the confidence of their customers and, worst of all, even the business of these customers as a consequence.

The present invention aims to solve the above-mentioned problem: the objective of this invention is to provide a system of automatically processing laundry that prevents the economic loss caused by sorting a customer's laundry incorrectly and reduces the time required to sort the laundry of each customer considerably, which in turn improves the confidence and efficiency of the service.

In order to achieve the above-mentioned objective, a system comprising the features of claim 1 is provided. Advantageous additional features are defined in the subclaims. The present invention comprises the following elements:

Based on the input of a user's key, laundry information (customer identification number, quantity, in/out time of laundry and type of laundry, color code, etc) and customer information (name of customer, telephone number, address, etc) are saved on the user's terminal, which sends/receives the stored information to/from the outside; and

The user's terminal is connected to a wireless modem that enables communication between the user's terminal and the wireless scanner;

The laundry system is programmed in accordance with the customer identification number, quantity of laundry and the time at which the laundry was brought in, which information is recorded in the bar code when the laundry is brought in, while a bar code modem is provided to print the bar code form that is then attached to the laundry;

Hangers are installed on one side of the storage facility that helps store and transport the laundry automatically after the processes of laundry work (washing, mending and ironing, etc.). This is enabled by a wireless scanner which reads the bar code that is attached to the laundry and sends the information to the user's terminal via a wireless terminal.

When the processed laundry is put on the storage facility hangers, the sorting indicator installed on the upper body of the hanger that is hung on the ceiling bar for storing the laundry, after receiving the information of laundry that is put on the hangers from the user's terminal, displays the customer identification number and the quantity of unsorted laundry to the customer and sends the information concerning the stored laundry to the user's terminal while displaying the location of laundry on the hangers to the customer.

The structure and function of the present invention will now be explained with reference to the accompanying drawings.

Figure 1 is a compositional drawing showing the automatic system of laundry in accordance with this invention;

Figure 2 is a magnified diagram of the sorting indicator shown in Figure 1;

Figure 3a and Figure 3e are the functional diagrams of the sorting indicator shown in the Figure 1.

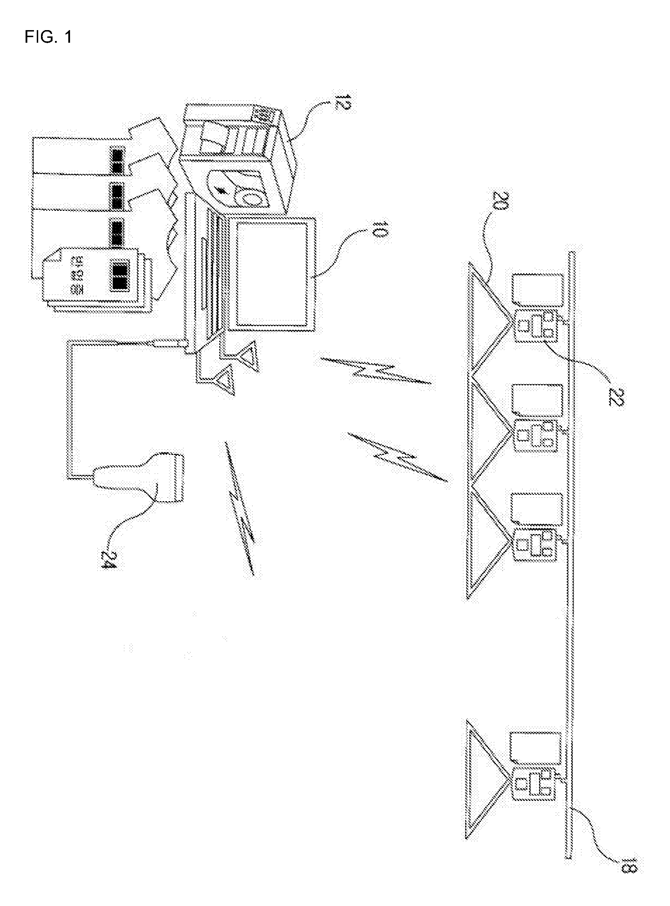

As illustrated in Fig. 1, in the system for automatically processing laundry, the laundry information (customer identification number, quantity, in/out time of laundry and type of laundry, color code, etc) and the customer information (name of customer, telephone number, address, etc) are saved on the user's terminal (10) in accordance with a user key. The user's terminal (10), which is connected to a wireless modem that enables the communication between the user's terminal and the wireless scanner, sends/receives the saved information to/from the outside.

By means of the user's terminal (10), the system for automatically processing laundry is programmed in accordance with the customer identification number, the quantity and time at which the laundry is brought in, which information is recorded in the bar code when the laundry is brought in, and a bar code modem (12) prints the bar code form that is then attached to the laundry;

Hangers are installed on one side of the storage facility that helps store and transport the laundry automatically after the individual processes of laundry work (washing, mending and ironing, etc.). This is made possible by a wireless scanner that reads the bar code that is attached to the laundry and sends the information to the user's terminal (10) via a wireless terminal (10-1).

When the processed laundry is put on the storage facility hangers (20), the sorting indicator (22) installed on the upper body of the hangers hung on the ceiling bar (18) for storing the laundry, after receiving the information of the laundry placed on the hangers (20) from the user's terminal (10), displays the customer identification number and the quantity of unsorted laundry to the customer and sends the information concerning the stored laundry to said user's terminal (10) while simultaneously displaying the location of laundry on the hangers (20) to the customer.

A bar code reader (24) which reads the bar code can also be connected to the user's terminal.

A tag printer can print an Arabic numeral on the left as shown in the picture below and a bar code on the right when the laundry information is printed on the tag. Thus, while the laundry is being processed, if the bar code scanner fails to acknowledge the bar code due to a damaged tag, the right customer can still be found through the Arabic numeral on the left.

Furthermore, it is ideal to place an invoice on one side of the sorting indicator (22) detailing the laundry information (customer identification number, quantity, in/out time of laundry and type of laundry, color code, etc).

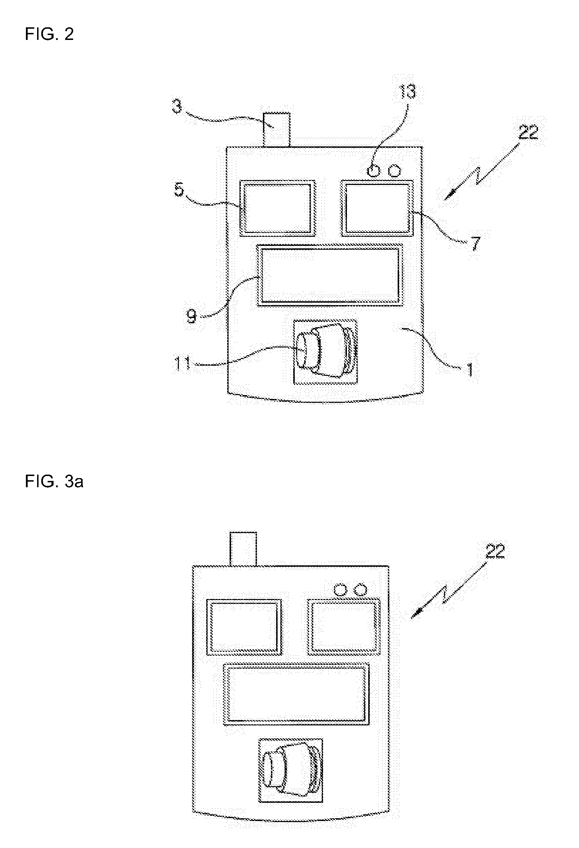

The sorting indicator (22), as shown in Fig. 2, has a rectangular body (22-1) comprising a variety of components including a control part (omitted in the illustration) that controls the sorting indicator and a memory (omitted in the illustration) that stores the information.

An antenna (22-3), installed on the upper part of the body (22-1) and controlled by the control part, is provided for receiving the laundry information (customer identification number, quantity, in/out time of laundry and type of laundry, color code, etc.) and the customer information (name of customer, telephone number, address, etc) from the user's terminal (10), and for sending the saved information to the user's terminal (10).

A location notice indicator (22-5), installed on the upper front part of the body and controlled by the control part, after receiving the information from the user's terminal (10), displays the location of the laundry to the user when the laundry is placed on the hanger (20).

When the laundry is put on the hanger (20), a laundry sorting finish indicator (22-7), installed on the other side of the upper front part of the body and controlled by the control part, after receiving the information from the user's terminal (10), indicates that the laundry is finished to the user.

A customer identification number and unsorted quantity indicator (22-9) installed on the middle part of the main body, after receiving the information from the user's terminal (10), displays the customer identification number and the quantity of laundry that has not been sorted.

If the user activates the reset button (22-11) installed on the lower front part of the main body, the indicative motion of the customer identification number and unsorted quantity indicator shows the quantity of laundry on the hangers, as well as the total quantity of laundry, and initializes the sorting indicator (22).

A regular motion indicator (22-13), installed on the front part of the main body and controlled by the control part, displays the normal motion of the sorting indicator (22).

An irregular motion indicator (22-15), installed on the other side of front part of the main body and controlled by the control part, displays the abnormal motion of the sorting indicator (22) to the user.

The sorting indicator (22) is installed on each hanger (20) that is hung with several items on the ceiling bar (18).

After illustrating the structure of the system for automatically processing laundry, the following will illustrate how the system works:

First, when the laundry is brought to the service, the customer information (name of customer, telephone number, address, etc) and the laundry information (customer identification number, quantity, in/out time of laundry and type of laundry, color code, etc) are stored in the user's terminal (10) in accordance with a user key.

Then, in accordance with the saved information, a tag printer (12) that is connected to the user's terminal (10), after the installed program has recorded the customer identification number, quantity, in/out time of laundry in the bar code, prints the bar code tag together with an Arabic numeral.

The user then attaches the bar code tag to the laundry.

When the bar code tag is attached to the laundry, the laundry with the bar code tag is brought to the laundry equipment and washed.

When the washing process (washing, mending and ironing etc) is finished, the finished laundry is placed in the storage facility, which can be moved around in a fixed order.

Here, on one side of the storage facility (14), a removable wireless scanner is fixed, which reads the bar code attached to the laundry and sends the information to the user's terminal (10).

The user delivers the finished laundry from the storage facility (14) to the hangers that are hung on the ceiling bar (18).

When the clothes are put on the hangers (20), the sorting indicator (22) installed on the upper part of the hangers (20) saves the information of the laundry on the hangers (20) received from the user's terminal (10). Among the saved information, it displays the customer identification number and unsorted quantity to the user and sends the saved laundry information to the user's terminal (10) while simultaneously displaying the location of laundry on the hangers (20) to the user.

The detailed description on the motion of the sorting indicator (22) is now explained as follows:

The sorting indicator (22) comprises a main body (22-1) having a variety of components including a control part and a memory, an antenna (22-3), a location notice indicator (22-5), a laundry sorting finish indicator (22-7), a customer identification number and an unsorted quantity indicator (22-9), a reset button (22-11), a regular motion indicator (22-13) and an irregular motion indicator (22-15),

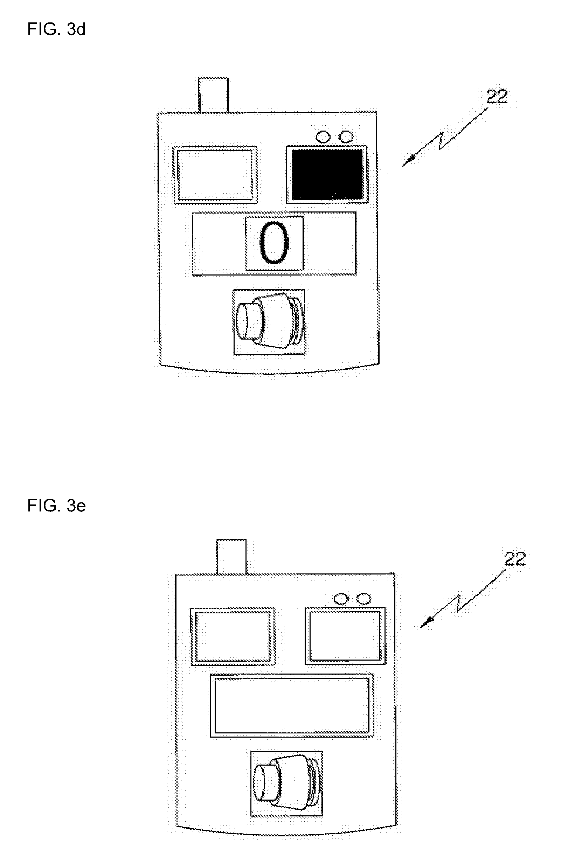

As shown in the Fig. 3a, when the power is on, the sorting indicator (22) in the beginning controls the LED of the regular motion indicator (22-13), while the regular motion indicator (22-13) always functions as long as the sorting indicator (22) is working normally.

The antenna (22-3) then receives the finished laundry information (customer identification number, quantity, in/out time of laundry and type of laundry, color code, etc) and the customer information (name of customer, telephone number, address, etc) from the user's terminal (10). Also, the antenna (22-3), which is controlled by the control part, sends the saved information to the user's terminal (10).

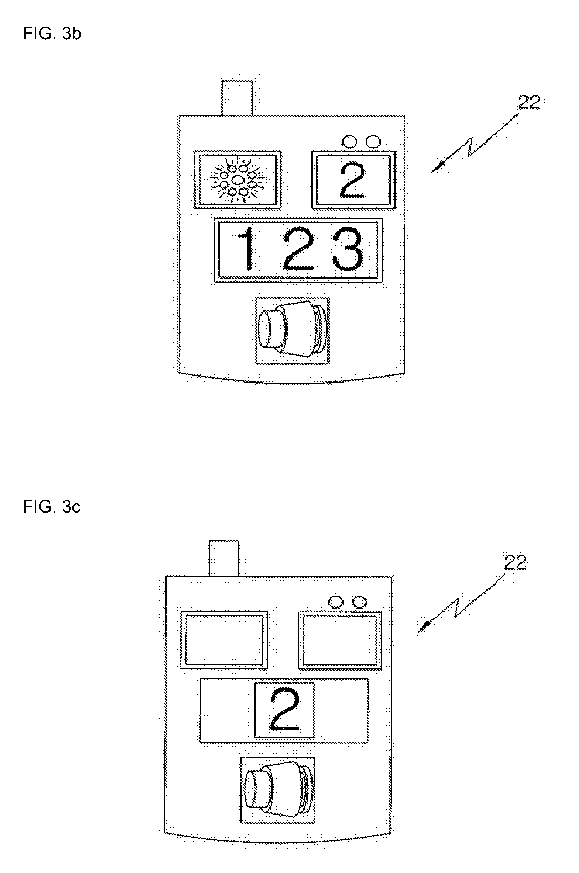

Then, the location notice indicator (22-5) of the sorting indicator (22), which receives the laundry information and the customer information when the finished laundry is put on the hanger (20) from the user's terminal (10), and which is controlled by the control part, displays the number of the customer, as shown in the Fig. 3b.

After the laundry is put on the hanger (20), if the user activates the reset button (22-11), the customer identification number and the unsorted quantity indicator (22-9) of the sorting indicator (22), which is controlled by the control part, displays, among the laundry information received from the user's terminal (10), the quantity of unsorted laundry to the user, as shown in the Fig. 3c.

When the sorting of the laundry has been completed, the laundry sorting finish indicator (22-7) of the sorting indicator (22), which is controlled by the control part, indicates to the user that the sorting of the laundry has been completed. At this time, the unsorted quantity indicator (22-9) of the sorting indicator (22) displays, among the laundry information received from the user's terminal (10), "0", the LED number indicating the unsorted quantity of laundry, as shown in Fig. 3d.

On the other hand, if something goes wrong, the irregular motion indicator (22-15) of the sorting indicator (22), which is controlled by the control part, displays the abnormal motion of the sorting indicator (22) to the user.

As explained above, the present invention helps prevent errors or loss of laundry in advance by reducing the risk of errors occurring during the process of sorting laundry. Thus, it helps prevent the financial loss caused by a loss of confidence in laundry services while dramatically reducing the time required to sort the laundry for each and every customer and improving the effectiveness of its service.

## Claims

1. A system for automatically processing laundry comprising:
- a user terminal (10) for storing laundry information and customer information according to the input of a user key and for sending and/or receiving stored information to and/or from the outside,
- a bar code modem (12) connected to the user terminal (10) for programming the laundry in accordance with the laundry information and for printing a bar code form that is attached to the laundry,
- a wireless scanner, installed on one side of a storage facility for storing and moving the laundry, which can read the bar code that is attached to the laundry and send the information to the user terminal (10);
- a wireless modem that is attached to the user terminal (10) and that enables the communication between the wireless scanner and the user terminal (10);
- a sorting indicator (22) coupled to the means for storing the laundry in the storage facility for displaying received laundry information and the quantity of unsorted laundry to the customer and for sending the information regarding stored laundry to the user terminal (10) and for displaying the location of the stored laundry to the customer.

2. System according to claim 1, wherein the laundry information includes a customer identification number, a quantity, an in/out time of the laundry and/or the type of laundry, and the customer information includes the name of the customer, the telephone number and/or the address.

3. System according to claim 2, wherein the laundry is programmed by the bar code modem (12) in accordance with the customer identification number, quantity and the time the laundry is brought in.

4. System according to any one of the preceding claims, wherein the sorting indicator (22) is installed on the upper body of hangers (20) that hang on a ceiling bar (18).

5. System according to any one of the preceding claims, wherein the sorting indicator (22) comprises a body (22-1) including a control part that controls the sorting indicator (22), a memory that saves the information and an antenna (22-3), installed on the upper part of the body (22-1) and controlled by the control part, for receiving the laundry information and the customer information from the user terminal (10) and for sending the stored information to the user terminal (10).

6. System according to any one of the preceding claims, wherein the sorting indicator (22) comprises a location notice indicator (22-5), controlled by the control part, for displaying to the user the location of laundry.

7. System according to any one of the preceding claims, wherein the sorting indicator (22) comprises a laundry sorting finish indicator (22-7) controlled by the control part for displaying to the user which laundry has been sorted.

8. System according to any one of the preceding claims, wherein the sorting indicator (22) comprises a customer identification number and unsorted quantity indicator (22-9) for displaying the customer identification number and the quantity which has not been sorted.

9. System according to any one of the preceding claims , wherein the sorting indicator (22) comprises a reset button (22-11) which, when pressed by the user, activates a display of the quantity of laundry on the hangers, as well as the total quantity of laundry, while simultaneously initializing the sorting indicator (22); and,
a regular motion indicator (22-13) controlled by the control part for displaying the normal motion of the sorting indicator (22); and,
an irregular motion indicator (22-15) controlled by the control part for displaying the abnormal motion of the sorting indicator (22) to the user.
